# EUROPEAN PATENT APPLICATION

(11) **EP 2 015 218 A2**
(43) Date of publication of application: **14.01.2009**
(21) Application number: 08158325.4
(22) Date of filing: 16.06.2008
(51) Int. Cl.: G06F 21/00

(54) **Method and system for data product license-modification coupons**

(30) Priority: 17.06.2007 US 764203
(71) Applicant: Aladdin Knowledge Systems Ltd., 49511 Petach Tikva (IL)
(72) Inventor: Zunke, Michael, 49511, Petach Tikva (IL); Margalit, Yanki, 49511, Petach Tikva (IL); Margalit, Dani, 49511, Petach Tikva (IL)
(74) Representative: Papa, Elisabetta

(57) **Abstract**

A method and system for issuing and redeeming digital coupons for requesting and granting modifications of licensed computer data products. Modifications include versions and configurations of the licensed data product as well as licensing issues related thereto. A product licensor issues authenticated coupons to customer organizations which utilize the licensed data products. The coupons are not necessarily specific to any particular computer or device, data product, version, license or configuration. Coupons can thereby be easily distributed to users within the organization. A user fills out the coupon with a request for the desired modifications and sends the coupon to the licensor, who fulfills the request by sending modification installation code directly to the user, thereby avoiding unnecessary overhead burdens on the organization. Digital coupons may be used in conjunction with external hardware devices ("dongles") or with internal software licensing modules.

## Description

### FIELD OF THE INVENTION

The present invention relates to digital rights management, and, in particular, to a method and system for providing and honoring data product license-modification coupons.

### BACKGROUND OF THE INVENTION

Computer data products are commonly licensed to organizations which provide the licensed data products to a number of different individual users within the organization. It is also commonplace for a particular licensed computer data product to be issued in a series of different versions and to exist in a number of distinct configurations within each version. Specifically, different versions can exhibit different operational characteristics, different data compatibilities, and/or different capabilities. Furthermore, different configurations can also have different features and/or operational capabilities. Different users may require different versions and/or different configurations, depending on their particular needs.

### Licensed Computer Data Products

The terms "licensed computer data product", "licensed data product", and variants thereof herein denote any computer-related data product that is covered by a license, including, but not limited to: executable data, executable programs, applications, utilities, routines, applets, or similar code for execution on a computer; and content in digital data form (herein denoted as "digital content"), such as text, data and other data, audio, video, photographs, graphics, and multi-media; and games and the like, including supporting executable code, if any.

The term "computer" herein denotes any data processing device, including, but not limited to: mainframe computers; personal computers; workstations; servers; data network devices; portable computers, such as notebook computers, personal digital appliances (PDA), and the like; data terminals; game-playing devices; media players, multi-media players, and players of licensed data products; and telephonic devices with data processing capabilities, such as cellular telephones.

### Configurations and Versions

In a non-limiting example of different configurations for a licensed computer data product, a sophisticated user of a spreadsheet application might need advanced mathematical analysis functions that a casual user would not need. In this non-limiting example, the advanced mathematical analysis functions are typically provided via a module of add-on functions, a plug-in application, a special applications pack, or similar additional executable code. Other non-limiting ways of implementing such extensions in a licensed computer data product include providing all possible features thereof as latent capabilities within the product, but require the user to activate them via a special procedure.

It often occurs within an organization that different users of a particular licensed computer data product require different versions and/or different configurations. In turn, a licensed data product typically requires an individual license modification to change an installation to a different version or to a different configuration. Thus, a version modification or a configuration modification for a licensed computer data product implies a modification to the license for the computer data product. Hence, it is understood that a reference herein to a version modification or a configuration modification for a licensed computer data product is accompanied by a corresponding modification of the license itself.

### License Feature Modifications

In addition, there are modification requirements that involve only licensing features. The term "organization" herein denotes any collection of individuals or individual entities that utilizes or benefits from the use of a licensed data product, including, but not limited to: commercial; governmental; institutional; social; political; religious; educational; philanthropic; or special-interest groups. The term "licensing" herein encompasses all aspects and features of a license to use a licensed data product, including, but not limited to: the issuance of the license; the terms of the license; use, effect, or properties of the license not covered by a license agreement; and legal aspects of the license. The term "license feature" herein denotes any term or condition of a license. Non-limiting examples of license features include: term or extent of the license; applicability of the license; limitations of the license; legal conditions on the license. The term "modification" herein denotes any change to a license or license-related parameters, and includes, but is not limited to, changes commonly referred to as "upgrades"; "downgrades"; "renewals"; "extensions"; "installation" and "de-installation"; and "maintenance". The term "license modification" herein denotes a modification of a license feature, as defined above.

A non-limiting example of a license matter involves licensed data products that have time-based licenses, such as subscription-based licensing. A particular user may be informed that his or her subscription to use a particular licensed computer product is about to expire, and the license requires renewal. Although there are no version or configuration modifications involved in this case, the license itself requires modification regarding the terms thereof (e.g., a time-extension or renewal). Other license modifications include factors such as the number of times a licensed data product can be used. There is also a certain degree of overlap with configuration parameters, such as the resources available to a licensed data product, and the functionality that is available to a licensed data product. Therefore, the terms "version / configuration / license modification" and variants thereof herein denote any change to the terms or other parameters of a licensed computer data product that involves modifications to the licensing thereof.

### Prior Art License Modification Procedure for Organizations

Licensing changes, as noted above, create a management burden to the organization, in that the organization's administration must coordinate particular user needs regarding specific version / configuration / license modifications with obtaining the appropriate licenses therefor from the product licensor.

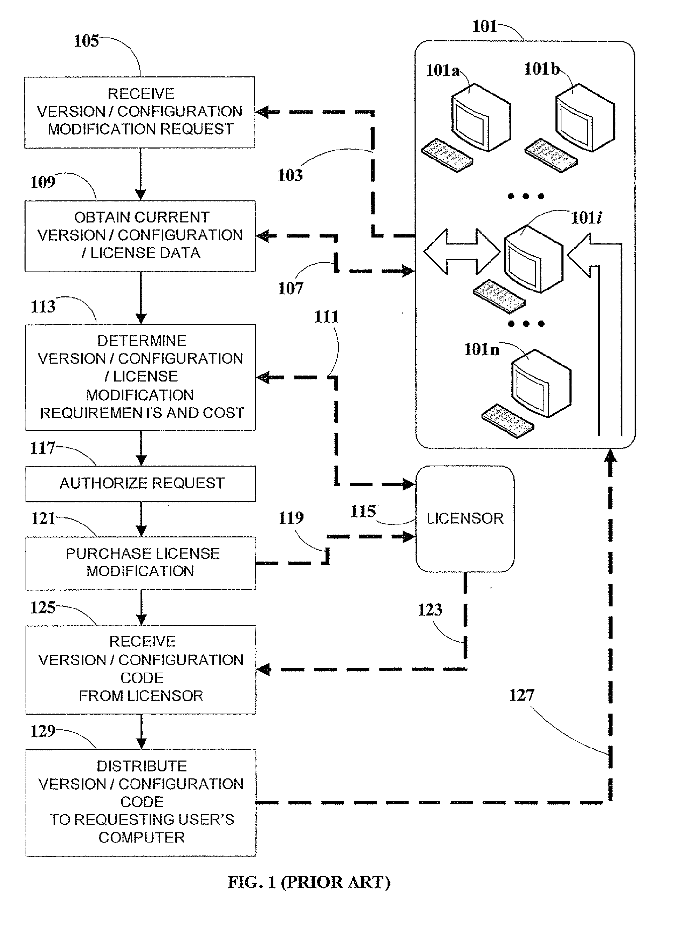

Figure 1 illustrates a typical prior-art procedure for modifying the version /configuration / license of a licensed data product in an organization. A user population **101** within the organization features a number of computers, denoted as a computer **101a,** a computer **101b,** a computer **101*i*** and a computer **101n.** In a step **105** a request **103** is received from one of the users - a user having computer **101*i*** - for a version / configuration modification of a licensed data product on computer **101*i*.**

In a step **109,** version / configuration / license data is obtained regarding the licensed computer data product on computer **101*i*,** via an interaction **107.** Alternatively, this data could also be obtained from a local database of the users, but in any case, an equivalent step has to be taken.

In a step **113,** the version / configuration / license modification required is determined, along with the cost, via an interaction **111** with a product licensor **115** who provides the licensed computer data product. The term "product licensor" herein denotes any entity which provides a licensed computer data product and is authorized or legally qualified to provide a license therefor. Examples of product licensors include, but are not limited to: retailers; wholesalers; distributors; rental organizations; developers; and publishers. So-called "third-party providers" of licensed data products ("third-party" denoting that the provider is independent of both the primary licensor of a data product and the user) are also construed as licensors in the context of the present invention.

In a step **117,** request **103** is authorized, and in a step **121,** a purchase order **119** is sent to product licensor **115.** In a step **125** version / configuration / license modification code is received from product licensor **115** via a delivery **123,** and finally in a step **129** the code is distributed to the requesting user's computer, computer **101*i*.** Modification code according to an embodiment of the present invention is executable code which performs a modification to a licensed computer data product installed on a computer. According to another embodiment of the present invention, modification code is used with a separate modification installation application to effect the desired modification(s).

### License Modification Code

The terms "version / configuration / license modification code" and variants thereof herein denote machine-readable data and executable code for installing license-related modifications on a computer, including, but not limited to: changing the version of the associated licensed computer data product; changing the configuration of the associated licensed computer data product; and changing the license of the associated licensed computer data product. The term "installation code" herein denotes the initial code for installing a complete version, configuration, or license on a computer, without modifying a pre-existing version, configuration, or license. The term "installation code" is herein construed to be encompassed by "version / configuration / license modification code" as a special case thereof (wherein no previous version, configuration, or license is necessary on the target computer, and the modification thus includes a complete installation). The terms "install" and variants thereof herein also apply to license modifications and the process of making a license modification effective on a particular computer.

As can be seen from the above description with reference to Figure 1, the procedure is involved and potentially time-consuming when a large number of users must be supported with frequent version / configuration modification requests.

There is thus a need for, and it would be highly advantageous to have, a method and system for efficient handling of version / configuration / license modification requests for licensed data products. This goal is met by the present invention.

### SUMMARY OF THE INVENTION

The present invention is a method and system for efficient administration of version configuration / license modification for licensed computer data products.

According to the present invention, digital coupons are purchased or otherwise legally obtained by the organization (through the normal administrative channels thereof) from the product licensor, and the coupons are distributed to the computers of users requesting version / configuration / license modification. Thereafter, a user requiring version / configuration / license modification sends the digital coupon to the product licensor (such as via a network), and receives version / configuration / license modification code directly from the product licensor (such as via the same network). Involvement of organizational administration in handling the process of license modification, and the associated overhead burden, is thus minimized.

In particular, according to embodiments of the present invention, it is not necessary for the organization's administration to collect any specific data related to the computers upon which the modifications are to be made; it is not necessary for the organization's administration to collect any specific data or determine the parameters of the license modifications themselves; nor is it necessary for the organization's administration to receive, handle, store, process, or distribute any version /configuration / license modification code; moreover, the distribution of the digital coupons is simple. According to certain embodiments of the present invention, digital coupons are issued and distributed without having any association to any specific computer, data product, version, configuration, or license. Therefore, no determination is necessary as to which digital coupons are sent to the various computers of the organization.

In addition, according to embodiments of the present invention, payment for the coupons can be made in a variety of fashions, including, but not limited to: advance payment for coupons; and payment for coupons upon redemption by users. According to other embodiments of the present invention, the organization administration can receive a detailed accounting report of the coupons ordered and those redeemed from the product licensor.

Moreover, according to embodiments of the present invention, the management, installation, validation, monitoring, enforcement, etc., of the modification of version, configuration, and license in an individual computer can be via: a software module installed in the computer; a hardware device installed internally within the computer; a hardware device installed externally outside the computer; a remote server; or a combination of the foregoing.

Therefore, according to the present invention there is provided a method for modifying a license for a computer data product licensed on a user computer within an organization, the method including: (a) creating a digital coupon containing data operative to authorize the sending of modification code to effect a modification of the license; (b) sending the digital coupon to at least one of the organization and the user computer; (c) receiving the digital coupon from the user computer; (d) preparing modification code corresponding to the digital coupon; and (e) sending the modification code to the user computer for performing the modification.

Also, according to the present invention there is provided a method for modifying a license for a computer data product licensed by a licensor on a user computer within an organization, the method including: (a) receiving a digital coupon containing data operative to authorize the sending of modification code to effect a modification of the license; (b) sending the digital coupon to the licensor; (c) receiving modification code operative to perform the modification on the user computer; and (d) installing the modification code on the user computer, to effect the modification.

The above method also optionally provides for inserting additional data within the digital coupon, wherein the additional data specifies at least one feature of the modification. According to an embodiment of the present invention, additional data necessary may be stored on a licensor's database associated with the ID of the digital coupon.

In addition, according to the present invention there is provided a computer-readable digital coupon data object including data operative to authorize the sending of modification code to effect a modification of a license for a computer data product, wherein the data includes: (a) data identifying a plurality of computers containing the computer data product; and (b) data operative to authorize the sending of the modification code to at least one of the computers of the plurality of computers.

In another embodiment of the present invention, a digital coupon is a unique identifier serving as an index into a Customer Relationship Management System (CRM) / Enterprise Resource Planning System (ERP) of the licensor. The database contains all information required for the licensor to create the necessary modification code. Typically, the user's computer presents the coupon unique identifier and delivers information about the user (such as the user's computer) for the licensor to verify that the user is entitled to redeem the digital coupon, and to create modification code that is useable for that specific computer. Then the coupon is marked as having been used, to prevent fraudulent reuse. In a related embodiment of the present invention, a digital coupon can be used multiple times, to enable deployment in an enterprise environment having a multiplicity of computers which can be supported by a single coupon. For this embodiment, the licensor's server controls the number of times the coupon can be redeemed.

Moreover, according to the present invention there is provided a digital coupon manager for a user computer containing a licensed computer data product and a license therefor, the digital coupon manager including: (a) a coupon database operative to store and retrieve a digital coupon containing data operative to authorize the sending of modification code to effect a modification of the license; (b) a database manager operative to manage the coupon database; (c) an interface operative to receive and send a digital coupon via a network; and (d) a coupon policy executive module operative to: (e) receiving a digital coupon; (f) inserting additional data into the digital coupon; and (g) sending the digital coupon.

The term "digital coupon manager" herein denotes a hardware device and/or software for managing digital coupons, capable of operations including, but not limited to: storing; organizing; retrieving; redeeming digital coupons; scheduling and performing the requests to obtain digital coupons; and scheduling the redemption of digital coupons.

Furthermore, according to the present invention there is provided a digital coupon manager for a licensor server, wherein the licensor provides a license to a computer data product, the digital coupon manager including: (a) a coupon database operative to store and retrieve a digital coupon containing data operative to authorize the sending of modification code to effect a modification of the license; (b) a database manager operative to manage the coupon database; (c) an interface operative to receive and send a digital coupon via a network; and (d) a coupon policy executive module operative to: (e) creating a digital coupon; (f) receiving a digital coupon; and (g) authorizing the sending of modification code to effect a modification of the license.

### BRIEF DESCRIPTION OF THE DRAWINGS

The invention is herein described, by way of example only, with reference to the accompanying drawings, wherein:
Figure 1 illustrates a typical prior-art procedure for modifying the version and/or configuration of a licensed data product in an organization.
Figure 2 shows the data organization of a digital coupon according to an embodiment of the present invention.
Figure 3 is a conceptual block diagram of a digital coupon manager for a client computer according an embodiment of the present invention.
Figure 4 is a conceptual block diagram of a digital coupon manager for a server according an embodiment of the present invention.
Figure 5 is a flowchart of a method for issuing and redeeming digital coupons according to an embodiment of the present method.

### DESCRIPTION OF THE PREFERRED EMBODIMENTS

The principles and operation of a method and system for administering computer data product license modifications according to the present invention may be understood with reference to the drawings and the accompanying description.

### Digital Coupon for Version / Configuration / License Modification

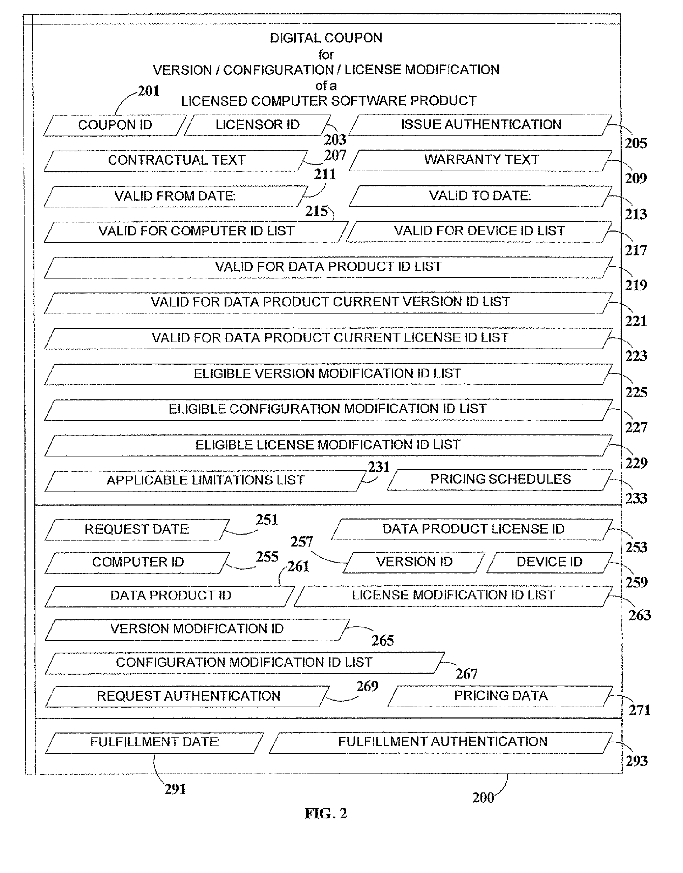

Figure 2 shows the data organization of a digital coupon 200 according to an embodiment of the present invention. The terms "digital coupon" and "coupon" herein denote a computer-readable data object which, under certain predetermined conditions, authorizes one or more modifications to be made to the version, configuration, and/or license terms for a licensed computer data product. According to embodiments of the present invention, digital coupons are issued by the product licensor and can be redeemed by users to obtain modifications of the version, configuration, and license terms of a specified computer data product of the product licensor.

According to embodiments of the present invention, a digital coupon typically specifies a multiplicity of computers containing the licensed computer data product, for which the coupon is eligible to be used to obtain a license modification. This is a feature of the digital coupon which is of particular value, since such a coupon is not specific to any one computer, but may be applied to modifications for a large number of computers having the licensed computer data product. Thus, the organization does not have the burden of individually sorting such coupons, but may simply distribute them in no particular order to the various computers. According to embodiments of the present invention, the digital coupons also contain data which authorizes the licensor to send the appropriate modification code to a computer sending in the coupon for redemption.

In another embodiment of the present invention, the coupon itself does not contain any information about the computer. Instead, in this embodiment, the licensor retrieves additional data about the user and computer during the process of coupon redemption, and determines at that time this particular user/computer is eligible to receive the update or modification. As non-limiting examples, the licensor makes a determination to ascertain that a predetermined previous license is already present on the target computer; that a predetermined base software package is installed.

Other embodiments of the present invention include data within the digital coupon for identifying versions and configurations of licensed computer data products, as detailed below.

It is emphasized that a digital coupon itself does not perform any modifications, nor is a digital coupon used in the actual modification process within the host computer that runs the licensed computer data product. According to embodiments of the present invention, a digital coupon serves as a ticket or credit voucher to securely communicate a request for license modification from the user to the product licensor and serves to certify that the presenter of the coupon is entitled or authorized to obtain a specified license modification on a computer within a predetermined group of computers. A digital coupon contains data that enables or authorizes the sending of modification code to the coupon presenter or a computer associated therewith. As previously noted, for certain embodiments of the present invention, the version / configuration / license modification code sent by the licensor in response to the receipt of the digital coupon performs the actual version /configuration / license modification, as detailed herein. Digital coupons according to certain embodiments of the present invention also allow the user or a computer associated with a user to insert additional data within the coupon that specify one or more features of the modification, as detailed herein.

It is common for a data product license to be monitored and/or enforced on a computer. As noted elsewhere herein, this monitoring / enforcement is done in a variety of ways, in some cases relying on internal software, and in other cases relying on an external device, often referred to as a "dongle".

It is also noted, as detailed below, that a digital coupon according to embodiments of the present invention may partially specify the computers, external devices ("dongles"), data products, versions, configurations, and licenses for which the coupon is applicable. In a non-limiting example, a coupon may be valid only for a certain version of a certain product, but for any computer running that version. In another non-limiting example, the coupon may be valid for any of a number of products and versions, but only on a specified subset of computers.

The data structure of digital coupon **200** according to embodiments of the present invention includes data fields **201** through **233** when issued, as follows: A coupon ID **201** contains a unique identifier for digital coupon **200.** A licensor ID **203** contains a unique identifier for the product licensor who issues digital coupon **200.** According to another embodiment of the present invention, licensor ID **203** also contains public key and certificate data pertaining to the product licensor. An issue authentication **205** is used to establish the authenticity of data fields **201** through **233,** such as via a secure hash of data fields **201** through **233** in a digital signature signed by the product licensor. Authentication **205** may later be validated by confirming the digital signature and the secure hash, through methods that are well-known in the art. The terms "authenticate" and related forms herein denote the process of providing a secure data object which can be subsequently validated to establish the source of the data object and to establish that the data object has not been corrupted or modified by errors or tampering. The terms "validate" and related forms herein denote the process of confirming the secure data object. The secure data object of an authentication /validation process can be self-contained, or can apply to auxiliary data. Authentication and validation can be performed through methods well-known in the art, such as by employing digital signatures and other cryptographic techniques, particularly those related to public-key cryptography.

A contractual text field **207** contains contract text which can be displayed to the user, detailing the contractual aspects of digital coupon **200**, including, but not limited to the terms and conditions applicable to: issue; distribution; use and possession; monetary value (if any); and redemption of coupon **200**. Contractual text field **207** may be in display format, such as HTML, and may optionally contain hypertext links and other references for further information. In a similar manner, a warranty text field **209** may supplement contractual text field **207**.

A beginning validity date field **211** specifies the earliest date for the use of digital coupon **200,** and an ending validity date field **213** specifies the latest date for use.

A valid computer ID list **215** specifies the computers for which digital coupon **200** is valid. Likewise, a valid device list **217** specifies the hardware devices (such as dongles) for which coupon **200** is valid. Other lists specifying limits on the validity of digital coupon **200** include: a data product ID list **219,** and a current version ID list **221**, a current license ID list **223**.

To specify what modifications are available, digital coupon **200** includes: an eligible version modification ID list **225**, for the version modifications available; an eligible configuration modification ID list **227,** for the configuration modifications available; and an eligible license modification ID list **229,** for the license modifications available. Under this scheme, each potential modification has an identifier. In an embodiment of the present invention, the identifiers are modeled after catalog numbers or part numbers.

An applicable limitations list **231** contains limitations on the combinations of the above available modifications which may be available. In a non-limiting example, certain configurations may not be available for certain versions of the computer data product. Limitations in list **231** can also be expressed as rules which specify which combinations are allowed and which are not allowed. An optional pricing schedules field **233** provides data about the costs of the different modifications and modification combinations that are permitted.

As previously noted, the integrity and authenticity of data fields **201** through 233 above can be verified by validating issue authentication field **205.**

In general, as illustrated for the embodiment discussed above, a digital coupon can serve for ordering many different variations in the version / configuration / and license modifications required by a user. Therefore, in an embodiment of the present invention (also illustrated in Figure 2), data fields are provided which can be filled in by the user and/or the user's computer to specify which version / configuration / and license modification(s) are needed. These fill-in data fields are data fields **251** through **271** as shown in Figure 2. Details of the process for filling in data fields **251** through **271** is covered in a later section.

A request date field **251** indicates when the user initiates a request to redeem digital coupon **200** for one or more modifications, and can be filled in automatically by a digital coupon client module, as detailed in a later section. A data product license ID field **253**, a computer ID field **255**, a version ID field **257**, and a device ID field **259** can also be filled in automatically by the digital coupon client module. If modifications to a multiplicity of computer data products can be covered by digital coupon **200**, as indicated in product ID list **219**, then the user would select which product and indicate the selected product in a data product ID field **261**. Likewise, if multiple version modifications are indicated in version modification ID list **225**, the user would select which version and indicate the selected version in a version modification ID field **265**.

If several cases, users can specify multiple options. If multiple license modifications are possible, as indicated in eligible license modification ID list **229**, the user can select one or more in a license modification ID list **263.** If multiple configuration modifications are possible, as indicated in eligible configuration modification ID list **227**, the user can select one or more configuration modifications in a configuration modification ID list **267.** As indicated above, however, there may be limitations on these choices, as specified in limitations list **231.** These limitations would be applied automatically, as detailed in a following section.

After the user has specified which modifications to apply, an optional pricing data field **271** is filled in automatically.

To secure the user's choices, a request authentication field **269** is automatically filled in. As in the case of issue authentication field **205,** request authentication field **269** can be implemented by a secure hash of the user's choices in data fields **251** through **267,** also including pricing data **271** and issue authentication field **205**, in a digital signature signed by the user. By including authentication field **205** in the secure hash, the user's request is tied to the issue data of digital coupon **200.**

When the user's request is fulfilled by the product licensor, as detailed in a following section, a fulfillment date field **291** is filled in by the product licensor, which then authenticates the fulfilled digital coupon via a fulfillment authentication field **293**, in a manner similar to that which has been described above for issue authentication field **205** and request authentication field **269.** Fulfillment authentication field **293** can similarly be tied both to issue authentication field **205** and request authentication field **269**.

### Digital Coupon Client Manager

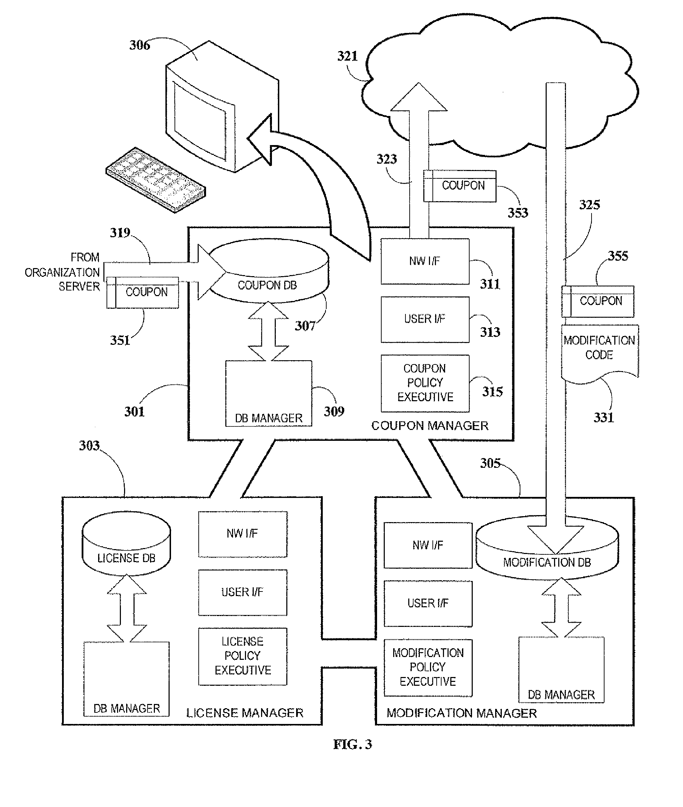

Figure 3 conceptually illustrates a block diagram featuring a client digital coupon manager **301** for a user's host computer **306** according to an embodiment of the present invention. Digital coupon manager **301** is associated with a license manager **303** and a modification manager **305**. In an embodiment of the present invention, coupon manager **301**, license manager **303,** and modification manager **305** are separate software modules; in another embodiment, they are combined within the same software module; in still another embodiment, they are located within an external hardware device (such as a token or "dongle").

The organization within which the user works obtains a digital coupon **351** (for version / configuration / license modifications on licensed computer data product running on computer **306**) from the product licensor, and sends coupon **351** via a delivery operation **319** to coupon manager **301,** which stores coupon **351** in a coupon database **307,** managed by a database manager **309.** Database **307** stores digital coupons for the user's host computer and maintains a record of issue, redemption, and fulfillment of coupons, along with related transactions. When the user wants to obtain a modification for the licensed data he or she utilizes coupon manager **301** to redeem coupon **351.** The subsequent actions are performed by coupon manager **301**, making use of a coupon policy executive module **315**, which provides control logic to oversee the coupon request process and the insertion of data into the coupon, both interactively with the user via a user interface **311**, and automatically where appropriate. Executive module **315,** for example, assures that coupon **351** is filled out consistently. Also included are a network interface **311** to send the filled-out coupon (shown as a coupon **353**) to the product licensor via a network transmission **323** over a network **321**. In particular, fields **251** through **271** (Figure 2) of coupon **351** are filled out via user choices based on the available options and parameters detailed in fields **215** through **233** (Figure 2).

When the product licensor receives valid coupon **353**, the appropriate modification code **331** is sent via a network transmission **325**, along with the fulfilled coupon (shown as a coupon **355**) to modification manager **305** for receipt and installation of the appropriate modification in computer **306**. As noted, modification manager **305** interacts with license manager **303** to make sure the license is properly updated with the new version / configuration / license parameters.

### Digital Coupon Server Manager

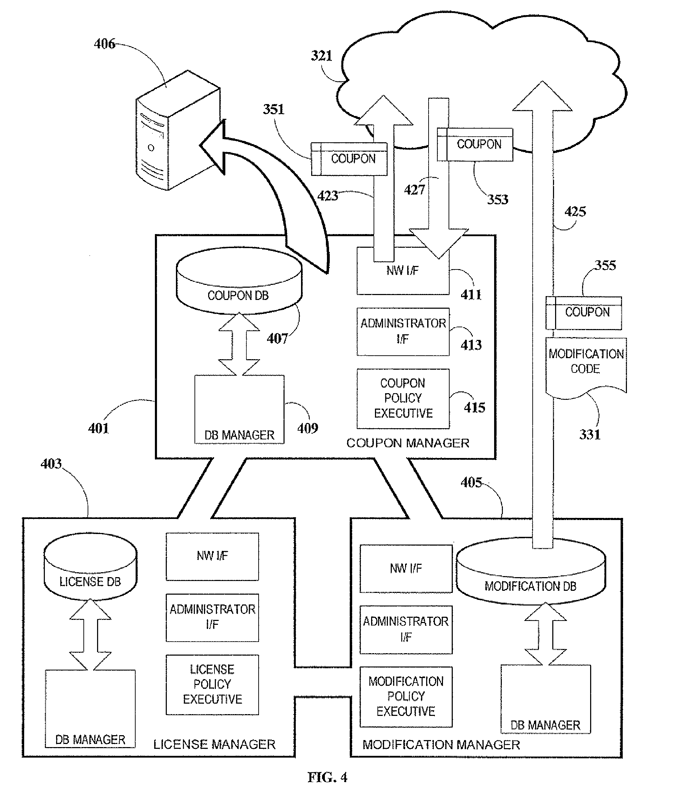

Figure 4 conceptually illustrates a block diagram featuring a server digital coupon manager **401** for a product licensor's host server **406** according to an embodiment of the present invention. Digital coupon manager **401** is associated with a license manager **403** and a modification manager **405**. In this embodiment of the present invention, license manager **403** and modification manager **405** are located on the same server **406** as coupon manager **401;** in a related embodiment of the present invention, however, these are located on different servers which are connected via the network.

Coupon manager **401** includes a coupon database **407** with a database manager **409**, a network interface **411,** and administrator interface **413** which allows licensor personnel to monitor and interact with the coupon processing cycle via queries, reports, and other management utilities. A coupon policy executive module **415** further contains logic to assure that digital coupons are properly generated and authenticated according to predetermined policy standards before being sent to organizations; and to assure that coupons received from users are properly filled in, are validated, and are being redeemed in compliance with the terms and conditions associated with the coupon; and that the appropriate modifications are furnished by modification manager **405** in response to received digital coupons.

To initiate a process of coupon issue, coupon manager **401** sends coupon **351** (as also shown in Figure 3) via a network transmission **423** over network **321** (as also shown in Figure 3) to an organization which is a customer of the applicable licensed computer data product. At a later time, a user within the customer organization may redeem a digital coupon by sending filled-in coupon **353** (as also shown in Figure 3) to the product licensor. Coupon **353** is received by the product licensor via a network reception **427**, at which time coupon **353** is validated by coupon policy executive module **415.** If coupon **353** is valid, modification manager **405** sends modification code **331** along with fulfilled coupon **355** (as also shown in Figure 3) to the user's client computer via a network transmission **425**.

### Method for Issuing and Redeeming Digital Coupons

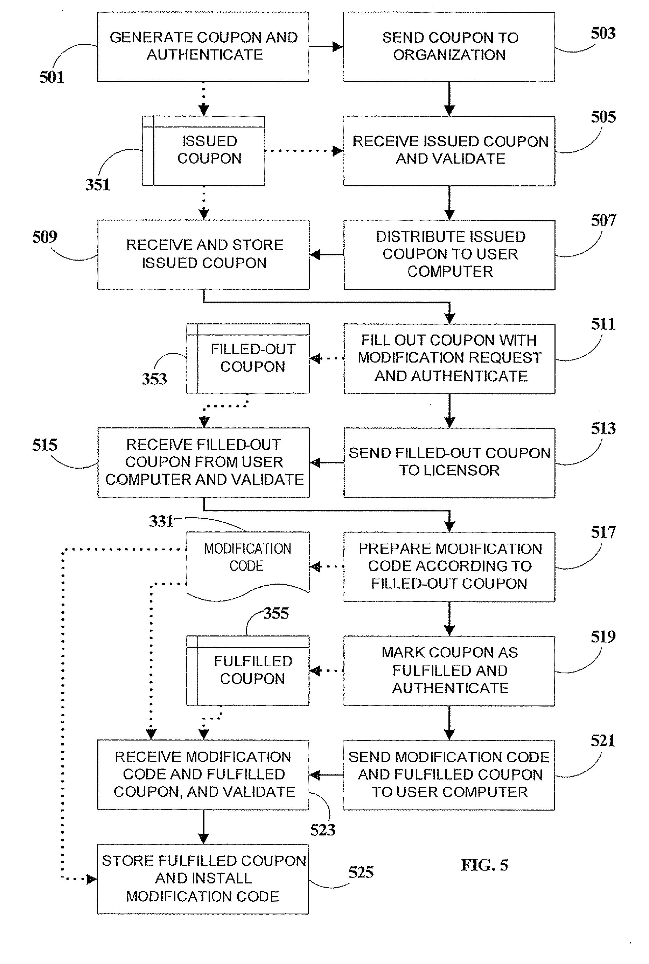

Figure 5 is a flowchart of a method according to the present invention for issuing and redeeming digital coupons for version / configuration / license modification of a licensed computer data product.

As in common usage, the term "redeeming" in the context of a digital coupon herein denotes sending the digital coupon to a designated authority and in turn receiving a version / configuration / license modification of a licensed computer data product as specified for that digital coupon.

In a step **501** a digital coupon **351** (as also shown in Figures 3 and 4) is generated and authenticated, as previously discussed regarding issue authentication **205** (Figure 2). In a step **503** coupon **351** is sent to a customer organization which uses the applicable licensed computer data product. In a step **505**, the customer organization receives issued coupon **351** and validates coupon **351** according to issue authentication **205**.

In a step **507**, coupon **351** is distributed to the user, and in a step **509**, coupon 351 is received and stored, such as in client coupon manager database **307** (Figure 3). In a step **511** coupon **351** is filled out with a modification request, as previously discussed for fields **251** through **271** (Figure 2), including being authenticated via request authentication **269** (Figure 2), thereby resulting in filled-out coupon **353** (as also shown in Figures 3 and 4). The terms "fill out" and variants thereof herein denote the insertion of additional data into a digital coupon for specifying a feature of the desired modification.

In a step **513**, coupon **353** is sent to the product licensor, and in a step **515**, coupon **353** is received and validated. Here, the validation is of request authentication **269** (Figure 2).

In a step **517,** requested modification code **331** (as also shown in Figures 3 and 4) is prepared according to filled-out coupon fields **251** through **271** (Figure 2), and in a step **519**, the coupon is marked as fulfilled and is authenticated, resulting in a fulfilled coupon **355** (as also shown in Figures 3 and 4).

In a step **521**, modification code **331** and fulfilled coupon **355** are sent to the user, and in a step **523**, modification code **331** and fulfilled coupon **355** are received and validated. Then, in a step **525**, fulfilled coupon **355** is received and stored, such as in client coupon manager database **307** (Figure 3), and modification code **331** is executed to install the desired version / configuration / license modification(s).

### Other Variations

Variations are covered by additional embodiments of the present invention. For example, according to one additional embodiment, a single digital coupon can be distributed to a number of separate users and redeemed for a multiplicity of modifications. In another additional embodiment, a different digital coupon is issued to each user, but may be redeemed a multiple number of times by the same user.

Payment variations available to product licensors include options for selling pre-paid coupons to organizations; and for issuing coupons that are payable by the organization only after redemption by users.

In an embodiment of the present invention, a valid coupons that has been redeemed is canceled and may not be used again. In another embodiment, a used coupon may be used again in a limited fashion. In a non-limiting example, a coupon may be valid for multiple uses; in another non-limiting example, a coupon may be reused to obtain an exact copy of the original modification code, such as when a user needs to replace data that may have been accidentally lost.

While the invention has been described with respect to a limited number of embodiments, it will be appreciated that many variations, modifications and other applications of the invention may be made.

## Claims

1. A method for modifying a license for a computer data product licensed on a user computer within an organization, the method comprising:
• creating a digital coupon containing data operative to authorize the sending of modification code to effect a modification of the license;
• sending said digital coupon to at least one of the organization and the user computer;
• receiving said digital coupon from the user computer;
• preparing modification code corresponding to said digital coupon; and
• sending said modification code to the user computer for performing said modification.

2. The method of claim 1, further comprising:
• authenticating said digital coupon; and
• validating said digital coupon after said receiving said digital coupon.

3. The method of claim 1, further comprising:
• retrieving data about the user computer; and
• determining if the user computer is eligible to receive said modification code.

4. The method of claim 3, wherein said determining if the user computer is eligible further comprises an operation selected from the group consisting of:
• determining if a predetermined previous license is present on the user computer; and
• determining if a predetermined base software package is installed on the user computer.

5. The method of claim 1, wherein the computer data product contains executable data.

6. The method of claim 1, wherein the computer data product contains digital content.

7. The method of claim 1, wherein at least one of said sending said digital coupon, said receiving said digital coupon, and said sending said modification code is performed via a network.

8. The method of claim 1, wherein said modification is selected from the group consisting of:
■ a version modification;
■ a configuration modification; and
■ a license modification.

9. A computer program product operative to perform the method of claim 1.

10. A method for modifying a license for a computer data product licensed by a licensor on a user computer within an organization, the method comprising:
• receiving a digital coupon containing data operative to authorize the sending of modification code to effect a modification of the license;
• sending said digital coupon to the licensor;
• receiving modification code operative to perform said modification on the user computer; and
• installing said modification code on the user computer, to effect said modification.

11. The method of claim 10, further comprising:
• inserting additional data within said digital coupon, wherein said additional data specifies at least one feature of said modification.

12. The method of claim 10, further comprising:
• validating said digital coupon after said receiving said digital coupon; and
• authenticating said digital coupon after said inserting additional data.

13. The method of claim 10, wherein the computer data product contains executable data.

14. The method of claim 10, wherein the computer data product contains digital content.

15. The method of claim 10, wherein at least one of said receiving said digital coupon, said sending said digital coupon, and said receiving said modification code is performed via a network.

16. The method of claim 10, wherein said modification is selected from the group consisting of:
■ a version modification;
■ a configuration modification; and
■ a license modification.

17. A computer program product operative to perform the method of claim 10.

18. A computer-readable digital coupon data object comprising data operative to authorize the sending of modification code to effect a modification of a license for a computer data product.

19. The computer-readable digital coupon of claim 18, wherein said data comprises an index into a Customer Relationship Management System.

20. The computer-readable digital coupon of claim 18, wherein said data comprises an index into an Enterprise Resource Planning System.

21. The computer-readable digital coupon of claim 18, wherein said data comprises:
• data identifying a plurality of computers containing the computer data product; and
• data operative to authorize the sending of the modification code to at least one of the computers of said plurality of computers.

22. The computer-readable digital data coupon of claim 18, further comprising data identifying at least one version of the computer data product.

23. The computer-readable digital data coupon of claim 18, further comprising data identifying at least one configuration of the computer data product.

24. The computer-readable digital data coupon of claim 18, further comprising data identifying at least one feature of the license for the computer data product.

25. The computer-readable digital data coupon of claim 18, further comprising at least one authentication.

26. The computer-readable digital data coupon of claim 18, further comprising data operative to allow the digital data coupon to be redeemed a plurality of times.

27. A digital coupon manager for a user computer containing a licensed computer data product and a license therefor, the digital coupon manager comprising:
• a coupon database operative to store and retrieve a digital coupon containing data operative to authorize the sending of modification code to effect a modification of the license;
• a database manager operative to manage said coupon database;
• an interface operative to receive and send a digital coupon via a network; and
• a coupon policy executive module operative to:
■ receiving a digital coupon;
■ inserting additional data into said digital coupon; and
■ sending said digital coupon.

28. The digital coupon manager of claim 27 further comprising a user interface.

29. The digital coupon manager of claim 27 further being operative to perform a process selected from the group consisting of:
• requesting a digital coupon;
• scheduling said requesting a digital coupon;
• redeeming a digital coupon; and
• scheduling said redeeming a digital coupon.

30. A digital coupon manager for a licensor server, wherein the licensor provides a license for a computer data product, the digital coupon manager comprising:
• a coupon database operative to store and retrieve a digital coupon containing data operative to authorize the sending of modification code to effect a modification of the license;
• a database manager operative to manage said coupon database;
• an interface operative to receive and send a digital coupon via a network; and
• a coupon policy executive module operative to:
■ creating a digital coupon;
■ receiving a digital coupon; and
■ authorizing the sending of modification code to effect a modification of the license.

31. The digital coupon manager of claim 30 further comprising an administrator interface.
